# FASCICULE DE BREVET EUROPEEN

(11) **EP 0 632 669 B1**
(45) Date de publication et mention de la délivrance du brevet: **08.09.2004**
(21) Numéro de dépôt: 94201802.9
(22) Date de dépôt: 23.06.1994
(51) Int. Cl.: H04Q 11/04, H04J 3/16

(54) **Système de communication comportant un réseau et un dispositif de démultiplexage du type ATM**
Kommunikationssystem mit ATM-Netz und -Demultiplexer
Communication system including ATM network and demultiplexer

(30) Priorité: 30.06.1993 FR 9308001
(43) Date de publication de la demande: 04.01.1995
(73) Titulaire: Koninklijke Philips Electronics N.V., 5621 BA Eindhoven (NL)
(72) Inventeur: Tibi, Georges, F-75008 Paris (FR)
(74) Mandataire: Chaffraix, Jean

(56) Documents cités:
- EP-A- 0 351 818
- WO-A-89/11764
- GB-A- 2 182 528

## Description

L'invention concerne un système de communication comportant un réseau et un dispositif de démultiplexage d'informations qui transmet d'un de ses points d'accès à un autre des cellules d'informations, cellules d'informations constituées par une partie d'en-tête contenant une indication de la destination et par une partie de données formée de l'information utile à transmettre, dispositif comportant :
- au moins un accès d'entrée pour recevoir lesdites cellules
- une pluralité d'accès de sortie pour des utilisateurs,
- au moins un circuit de réseau sur lequel est branché un accès d'entrée et qui comporte un organe d'analyse d'en-tête,
- une pluralité de circuits de service à chacun desquels est affecté au moins un accès de sortie,
- une ligne commune.

Les réseaux A.T.M. se répandent de plus en plus et permettent de transmettre des flots d'informations importants avec des débits variés pour satisfaire des besoins divers tels que liaisons téléphoniques et liaisons vidéo. Les informations sont transmises sous forme de cellules et les dispositifs de démultiplexage doivent aiguiller chaque cellule qu'ils reçoivent sur leur accès d'entrée vers le bon accès de sortie. Cette tâche devient de plus en plus ardue lorsque le nombre de cellules reçues devient de plus en plus élevé.

Un système de communication de ce genre comportant un dispositif qui peut effectuer des opérations de démultiplexage est connu de la demande de brevet français n° 2 670 972.

Ce dispositif connu est formé de joncteurs d'entrée dont les fonctions peuvent être assimilées aux circuits de réseaux précités et les joncteurs de sortie aux circuits de service.

Tous les joncteurs, tant de sortie que d'entrée, doivent avoir des caractéristiques identiques puisqu'on doit effectuer des opérations de brassages pour lesquelles toute cellule à l'entrée de n'importe quel joncteur d'entrée peut aller à la sortie de n'importe quel joncteur de sortie.

Il arrive que des utilisateurs voulant bénéficier des services des réseaux A.T.M., n'aient pas besoin de dispositifs du genre brasseur car souvent ils ont peu de points d'accès au réseau par rapport au nombre d'accès de sortie.

Un inconvénient du dispositif connu réside dans le fait qu'il y a un double stockage des cellules à transmettre : un premier stockage est effectué dans le joncteur d'entrée en attendant que le joncteur de sortie soit apte à recevoir la cellule qui lui est destinée et un second stockage, dans le joncteur de sortie en attendant que l'organe utilisateur vienne la prélever. Ce double stockage, outre le fait qu'il implique un surcroît de matériel, entraîne des retards de transmission qui peuvent nuire à certaines applications, par exemple la transmission d'images mobiles qui ne doivent pas être trop saccadées lors de leur restitution.

La présente invention propose un système de communication comportant un dispositif du genre mentionné dans le préambule qui ne nécessite pas ce double stockage de cellules.

Pour cela, un tel système est remarquable en ce que chaque circuit de réseau comporte une table de routage pour fournir sur la ligne de données commune une information de routage qui définit au moins le circuit de service et un organe combinatoire pour émettre sur la ligne de données à la fois les informations de routage et lesdites cellules.

La description suivante, accompagnée des dessins ci-annexés, le tout donné à titre d'exemple non limitatif, fera bien comprendre comment l'invention peut être réalisée.
- La figure 1 montre un réseau sur lequel peuvent se connecter des dispositifs de démultiplexage conformes à l'invention.
- La figure 2 montre la constitution d'une cellule d'information.
- La figure 3 montre un premier dispositif conforme à l'invention.
- La figure 4 montre une première variante de réalisation d'un organe combinatoire pouvant convenir au dispositif de la figure 3.
- La figure 5 montre une deuxième variante d'un organe combinatoire pouvant convenir au dispositif de la figure 3.
- La figure 6 montre une première variante de réalisation d'un organe de décodage pouvant coopérer avec l'organe de la figure 4.
- La figure 7 montre une deuxième variante d'un organe de décodage pouvant coopérer avec l'organe de la figure 5.
- La figure 8 montre un deuxième dispositif conforme à l'invention.
- La figure 9 montre la réalisation des organes combinatoires faisant partie du dispositif de la figure 8.
- La figure 10 montre l'allure des signaux d'horloge présents dans le dispositif de la figure 8.
- La figure 11 montre un diagramme temps pour faciliter l'explication de ce deuxième dispositif de l'invention.
- La figure 12 montre la réalisation des organes de décodage faisant partie du dispositif de la figure 8.

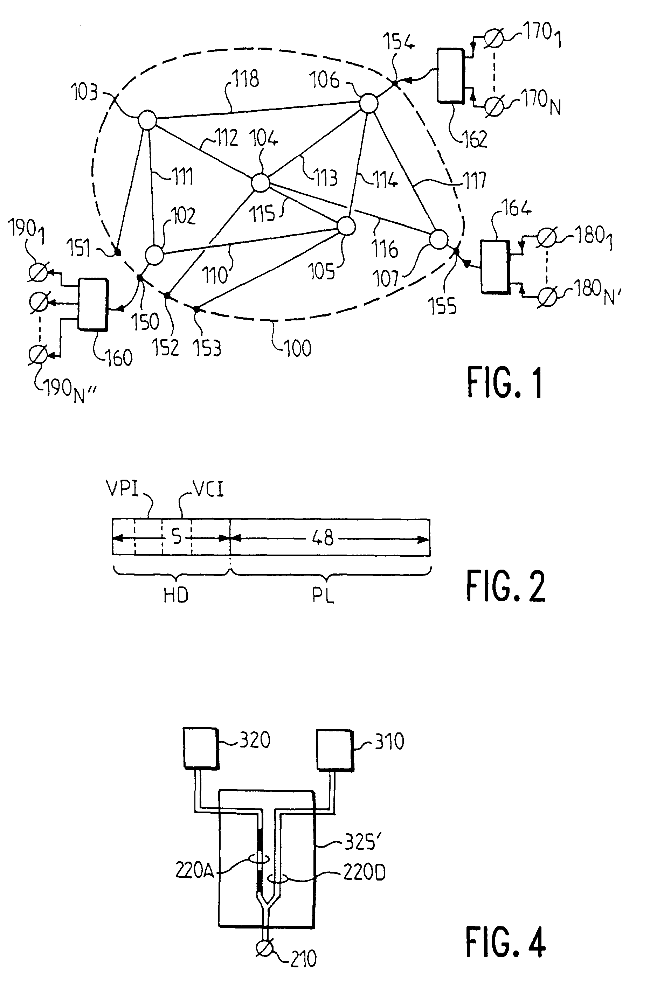

La figure 1 montre d'une manière schématisée un réseau A.T.M. portant sur la figure la référence 100. On trouvera une description de ce réseau dans l'ouvrage "ASYNCHRONOUS TRANSFER MODE" de MARTIN de PRYCKER, édité par ELLIS HORWOOD LIMITED en Angleterre. Ce genre de réseau est particulièrement adapté pour la transmission de services divers tels que vidéoconférence, liaisons téléphoniques, prolongations de réseaux locaux,...

Ce réseau est constitué de différents noeuds 102, 103, 104, 105 et 106 reliés entre eux par des liaisons 110 à 118 pour relier respectivement les noeuds 102-105, 102-103, 103-104, 104-106, 105-106, 104-105, 104-107, 106-107, 103-106. Au niveau des noeuds 102, 103, 104, 105, 106 et 107 on a repéré par 150, 151, 152, 153, 154, et 155 des points d'accès de ce réseau qui peuvent se situer en des endroits géographiques différents. En ces points, sont rattachés différents équipements qui effectuent sur un même endroit géographique des opérations de multiplexage et des opérations de démultiplexage. Pour simplifier les explications, on ne mentionnera par la suite que des dispositifs de multiplexage et des dispositifs de démultiplexage sans indiquer les équipements qui contiennent, en fait, les deux dispositifs. Aux points 150, 154 et 155 se connectent respectivement différents dispositifs de multiplexage et de démultiplexage 160, 162 et 164. Parmi ces dispositifs, il faut distinguer : un dispositif de démultiplexage 160, objet de la présente invention, et deux dispositifs de multiplexage 162 et 164 qui effectuent les opérations inverses de celles du dispositif 160. Ainsi les informations peuvent, dans le cadre de cet exemple décrit, aller des dispositifs 162 et 164 vers le dispositif 160 en transitant par le réseau 100. Ces informations à transmettre sont appliquées à une pluralité de bornes d'accès 170₁ à 170_{N}, d'une part, et 180₁ à 180_{N}', d'autre part, dont sont pourvus respectivement les dispositifs de multiplexage 162 et 164 et peuvent être fournies, entre autres, à des bornes de sortie 190₁ à 190_{N''} du dispositif 160.

Les informations transmises dans le réseau se présentent sous forme de cellules dont l'organisation est montrée à la figure 2. Ces cellules sont formées de 53 octets : 5 constituent l'en-tête HD et les 48 autres PL contiennent les données pour un service à transmettre, accompagnées éventuellement d'informations supplémentaires pour reconstituer les données de ce service à la réception. Dans l'en-tête, on distingue deux champs VPI et VCI qui sont formés respectivement de 8 et 16 éléments binaires et qui donnent l'adresse de destination de la cellule. On peut considérer le champ VPI comme l'adresse de l'équipement contenant l'organe de démultiplexage de destination, un VP, un chemin virtuel, reliant les deux équipements d'émission et de destination entre lesquels transitent des cellules. Le champ VCI peut, lui, être considéré comme l'adresse du service desservi par l'équipement de destination, un VC, un canal virtuel, reliant les deux équipements.

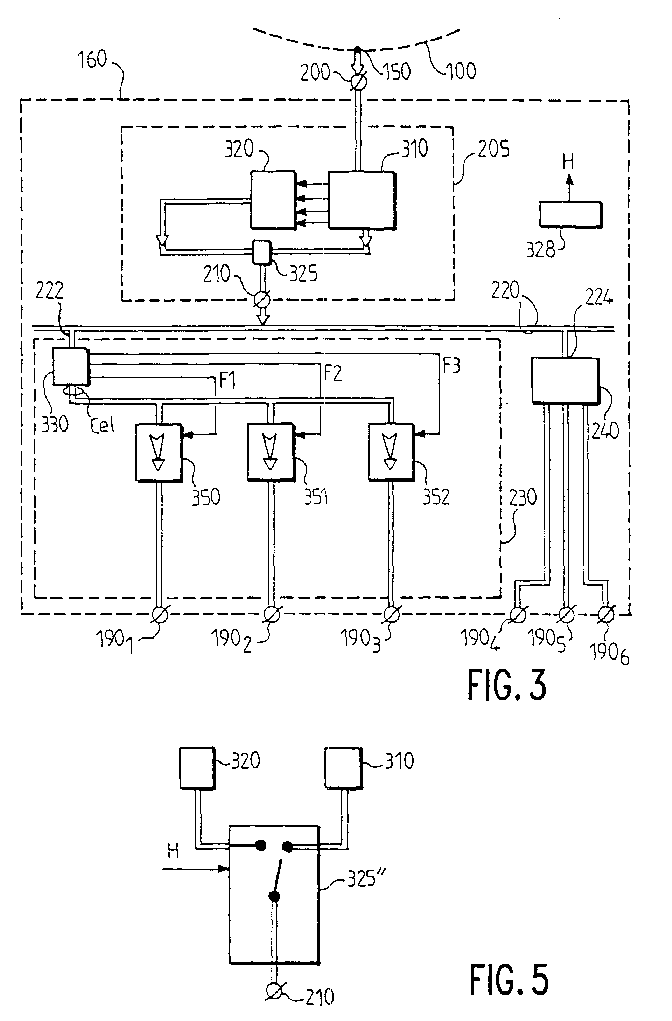

Le dispositif 160 montré à la figure 3 comporte un accès 200 relié au point 150 du réseau A.T.M. 100. Sur cet accès arrive tout un flot de cellules d'informations à destination des accès 190₁ à 190_{N''} qui sont affectés, par principe à des services pouvant être différents ; en fait, sur la figure, seuls 6 accès 190₁ à 190₆ sont représentés. Le dispositif de la figure 3 est formé d'un circuit de réseau 205 sur lequel est branché l'accès 200. Ce circuit de réseau est muni d'une sortie 210 qui est connectée à une ligne de données commune 220. Sur cette ligne 220, viennent se raccorder différentes entrées 222 et 224 de circuits de service 230 et 240. Les accès de sortie 190₁ à 190₃ appartiennent au circuit 230 et les accès 190₄ à 190₆ au circuit 240.

Conformément à l'invention, le circuit de réseau 205 comporte un organe d'analyse d'en-tête 310 coopérant avec une table de routage 320 pour fournir sur la ligne de données commune 220 une information de routage qui définit, en autres le circuit de service (230 ou 240 dans le cas de l'exemple de la figure 3) et un organe combinatoire 325 pour émettre sur la ligne commune à la fois les informations de routage et lesdites cellules.

Il convient d'analyser les champs VPI et VCI de l'en-tête de chaque cellule. Comme ces champs sont formés de 24 éléments binaires, on évite l'emploi d'une table de décodage qui aurait 2²⁴ (16777216) entrées. La table de routage 320 est réalisée de préférence selon les méthodes enseignées par l'article : "Putting Routing Tables in Silicon" de Tong-Bi Pei et Charles Zukowski, paru dans la revue IEEE Network Magazine de janvier 1992 aux pages 42 à 50. Cette table détermine donc en fonction du VPI et du VCI le circuit de service concerné et transmet sur la ligne 220 un code d'identification de la carte de service ainsi qu'un code de service rattaché à cette carte de service. Ces codes d'identification et de service constituent l'information de routage.

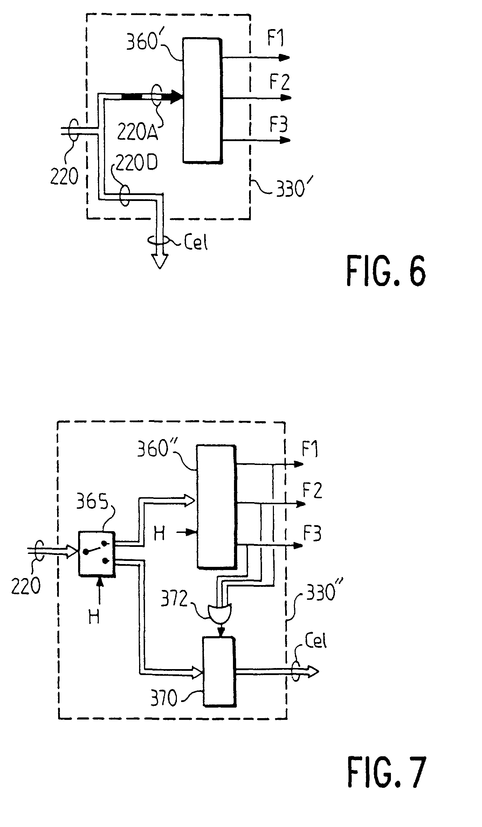

Les informations de routage et les cellules peuvent être transmises sur la ligne commune 220 selon au moins deux manières.
- une première manière consiste à transmettre ces informations et les cellules en parallèle sur deux nappes de fils différents 220A et 220D respectivement. Pour cela, on utilise un organe combinatoire 325' tel que représenté à la figure 4 qui finalement montre cette juxtaposition de fils.
- une autre manière consiste à les transmettre successivement sur des mêmes fils de cette ligne au rythme des signaux H d'une horloge 328. Pour cela, on utilise un organe combinatoire 325" tel que représenté à la figure 5 qui connecte, tour à tour, la ligne 220 à la sortie de la table de routage 320 puis à la sortie de l'organe d'analyse d'en-tête 310.

Quant aux circuits de service, ils comportent un organe de décodage 330 pour décoder les informations de routage et pour aiguiller les cellules sur des organes de service 350, 351 et 352 faisant partie du circuit de service 230, chacun rattaché à un accès de sortie 190₁ à 190₃. Ces organes de décodage sont munis d'une entrée qui est confondue avec l'entrée 222, si on considère l'organe 330, connectée à la ligne de données commune 220 et de sorties pour des fils F1, F2 et F3 pour activer l'un des organes de service 350, 351 et 352 concerné par le code présent sur la ligne 220. Ces organes de service emmagasinent la cellule rendue disponible à la sortie "Cel" de l'organe de décodage 330. Les organes de service sont constitués à partir de mémoires vives organisées en mémoires de files d'attente du genre première donnée inscrite, première donnée sortie (mémoire FIFO). Ainsi les cellules sont inscrites au rythme de leur arrivée au niveau de l'organe de service et sont prélevées au rythme imposé par l'utilisateur.

La figure 6 montre un organe de décodage 330' coopérant avec l'organe combinatoire de la figure 4. Il est formé d'un circuit de décodage 360 et fournit un signal actif sur l'un des fils F1, F2 ou F3 dès qu'un code concernant l'un des organes de service est concerné. Ce signal actif permet à l'organe de service concerné d'emmagasiner la cellule présente à la sortie "Cel" qui est branchée directement sur la ligne 220D.

L'organe de décodage 330" coopérant avec l'organe de la figure 5 est montré à la figure 7. Il est constitué d'un circuit de décodage 360" qui ne diffère du circuit 360' que par le fait qu'il est nanti d'une fonction de mémoire rafraîchie au rythme des signaux H. Ce circuit 360" est alimenté par les codes de la ligne 220 par l'intermédiaire d'un commutateur 365 à deux positions lorsque celui-ci est dans sa première position. Le changement de position est commandé au rythme des signaux H. Ce commutateur permet aussi d'appliquer, lorsqu'il est dans sa deuxième position, les codes de la ligne 220 aux entrées d'un registre 370. Une porte OU 372 dont les entrées sont reliées aux fils F1, F2 et F3 du circuit de décodage 360" autorise le chargement de ce registre lorsque un des signaux transmis sur l'un des fils F1, F2 ou F3 est actif.

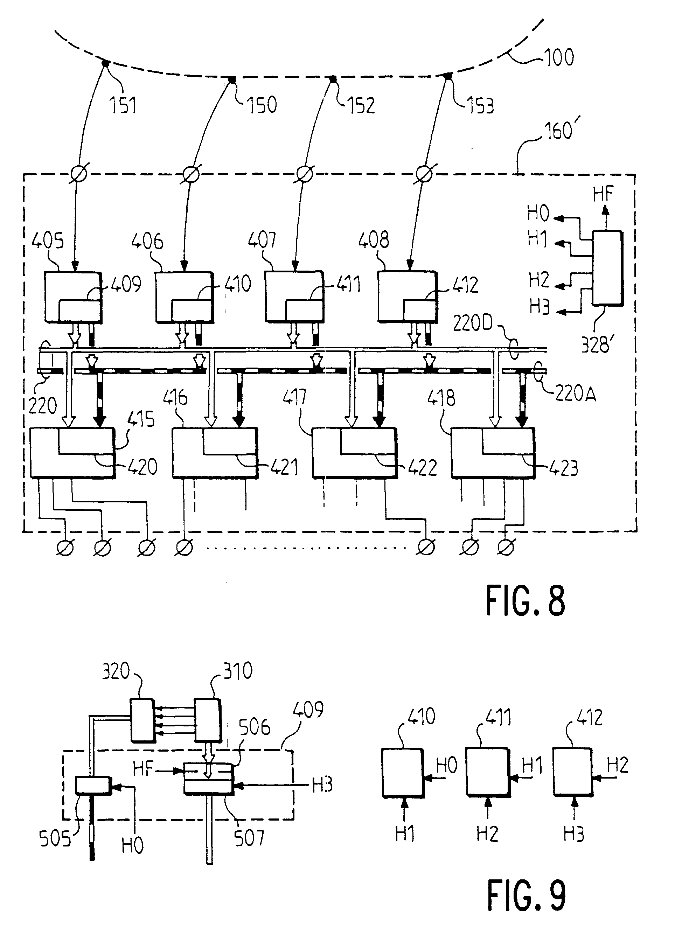

La figure 8 montre un mode de réalisation préféré de l'invention. Selon ce mode, le dispositif 160' est formé d'une pluralité de circuits de réseaux. Sur cet exemple illustré à cette figure, on en a représenté quatre : les circuits 405, 406, 407 et 408 dont les entrées sont branchées respectivement sur les points d'accès du réseau 151, 150, 152 et 153 et dont les sorties sont branchées sur la ligne commune 220 par l'intermédiaire des organes combinatoires 409, 410, 411 et 412. Cette ligne 220 est formée, d'une manière déjà dite, de deux nappes de fils 220A et 220D transmettant respectivement les informations de routage et les cellules. Le dispositif 160' comporte également une pluralité de circuits de service 415, 416, 417 et 418. Les entrées des organes de décodage 420, 421, 422 et 423 des circuits de services 415, 416, 417 et 418 respectivement sont connectées sur ces deux nappes 220A et 220D de cette ligne 220. La structure des circuits de réseaux 405 à 408 et celle des circuits de service 415 à 418 ne diffèrent de celles des circuits de service 230 et des circuits de réseaux 205 déjà décrites que par leur organes combinatoires et leurs organes de décodage.

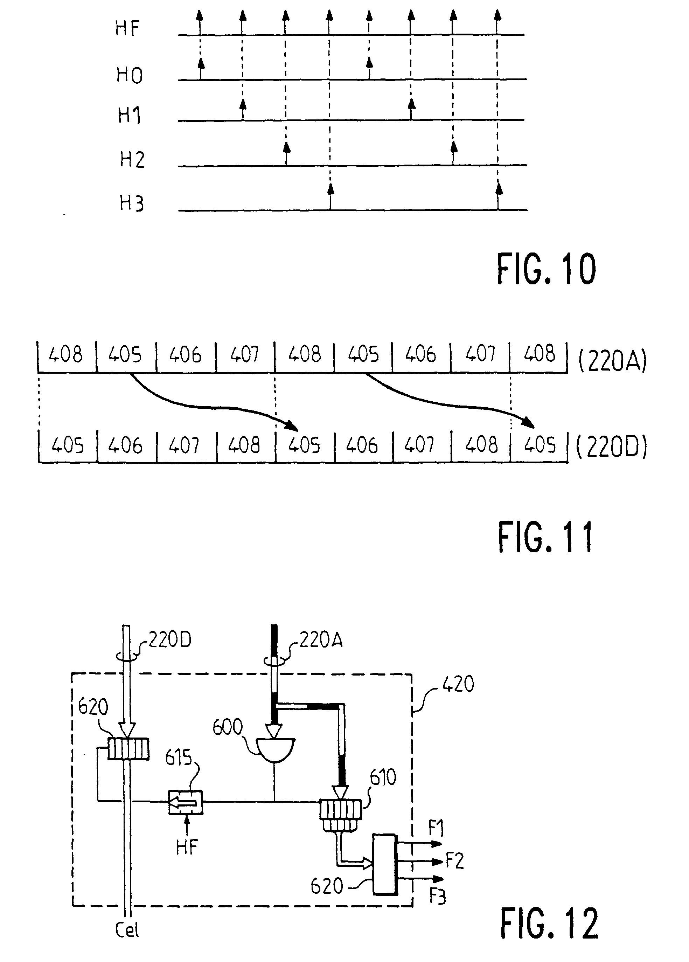

La figure 9 montre le détail des organes combinatoires des circuits de réseaux 405 à 408. Ces organes sont identiques, seuls les signaux de commande d'horloge H0, H1, H2 et H3 élaborés par un circuit d'horloge 328' les différencient. L'allure de ces signaux est montrée à la figure 10. Ces signaux sont dérivés, par une division par 4, d'un signal d'horloge HF fourni aussi par l'horloge 328' et sont déphasés mutuellement par une période du signal HF. Ils permettent d'allouer des temps d'accès à la ligne pour les circuits de réseaux. La période de ces signaux H0 à H3 est égale aux temps le plus petit qui sépare deux cellules provenant du réseau 100. Ainsi, on est assuré que le trafic sera écoulé par les cartes de réseau. L'organe combinatoire 409 fournit, à l'instant où H0 est actif, l'information de routage sur la ligne 220A et la cellule sur la ligne 220D après un temps égal à deux périodes du signal HF.

A cet effet, l'organe 409 (voir fig.9) est formé d'un premier registre 505 qui est connecté à la sortie de la table 320 et dont le contenu est déchargé sur la ligne 220A chaque fois que le signal H0 est actif. Un double registre 506 commandé par les signaux HF décale, de deux périodes de ce signal, la cellule à la sortie de l'organe d'analyse d'en-tête. C'est le signal H3 qui donne la possession de la ligne 220D pour la cellule du circuit de réseau 405 en agissant sur un circuit de sortie 507. La figure 11 montre le fonctionnement en pipe line des lignes 220A et 220D, les références dans les cases indiquent les références des circuits de réseaux qui utilisent ces lignes.

La figure 12 montre le détail de l'organe de décodage 420. La structure des autres organes de décodage appartenant aux circuits de service 506 à 508 en découlant directement peuvent se différencier uniquement par le nombre de fils d'activation F1, F2,....

Le circuit 420 est formé d'un circuit de décodage 600 qui fournit un signal actif dès qu'un code concernant le circuit de service qui le contient est présent sur la ligne 220A. Ce signal actif, d'une part, permet le chargement du code présent sur la ligne 220A dans un registre 610 et d'autre part, est emmagasiné dans un circuit de retard 615 commandé par les signaux HF de l'horloge 328' pour amener un retard égal à deux périodes du signal HF. Le signal actif ainsi retardé permet d'emmagasiner la cellule transmise par la ligne 220D. La cellule ainsi emmagasinée est dirigée vers l'organe de service validé par un des fils F1, F2 ou F3 présent à la sortie d'un circuit de décodage 620 branché aux sorties du registre 610.

## Revendications

1. Système de communication comportant un réseau (100) et un dispositif (160) de démultiplexage d'informations qui transmet d'un de ses points d'accès (150 - 155) à un autre des cellules d'informations, cellules d'informations constituées par une partie d'en-tête (HD) contenant une indication de la destination et par une partie de données (PL) formée de l'information utile à transmettre, dispositif comportant :
- au moins un accès d'entrée (200) pour recevoir lesdites cellules
- une pluralité d'accès de sortie (190₁₋₆) pour des utilisateurs,
- au moins un circuit de réseau (205) sur lequel est branché un accès d'entrée et qui comporte un organe (310) d'analyse d'en-tête,
- une pluralité de circuits de service (230,240) à chacun desquels est affecté au moins un accès de sortie,
- une ligne commune (220),
**caractérisé en ce que** chaque circuit de réseau (205) comporte une table de routage (320) pour fournir sur la ligne de données commune (220) une information de routage qui définit au moins le circuit de service (230,240) auquel est destinée la cellule et un organe combinatoire (325) pour émettre sur la ligne de données (220) à la fois les informations de routage et lesdites cellules.

2. Système de communication selon la revendication 1, **caractérisé en ce que** les circuits de service (230,240) comportent un organe de décodage (330) pour décoder les informations de routage et pour aiguiller les cellules sur des organes de service (350-352) faisant partie du circuit de service, chacun rattaché à un accès de sortie (190₁₋₆).

3. Système de communication selon l'une des revendications 1 à 2, **caractérisé en ce que** la ligne commune est formée d'une nappe pour la transmission des informations de routage et d'une autre pour la transmission des cellules.

4. Système de communication selon la revendication 1
ou 2 ou 3, **caractérisé en ce qu'**il est prévu une pluralité de circuits réseau et **en ce qu'**il est prévu des intervalles de temps d'accès sur la ligne commune de données pour la sortie de chacun des circuits de réseau.

5. Dispositif (160) de démultiplexage d'informations pour un réseau (100) du genre A.T.M., notamment, qui transmet d'un de ses points d'accès (150-155) à un autre des cellules d'informations, cellules d'informations constituées par une partie d'en-tête (HD) contenant une indication de la destination et par une partie de données (PL) formée de l'information utile à transmettre, dispositif comportant :
- au moins un accès d'entrée (200) pour recevoir lesdites cellules
- une pluralité d'accès de sortie (190₁₋₆) pour des utilisateurs,
- au moins un circuit de réseau (205) sur lequel est branché un accès d'entrée et qui comporte un organe (310) d'analyse d'en-tête,
- une pluralité de circuits de service (230,240) à chacun desquels est affecté au moins un accès de sortie,
- une ligne commune (220),
**caractérisé en ce que** chaque circuit de réseau (205) comporte une table de routage (320) pour fournir sur la ligne de données commune (220) une information de routage qui définit au moins le circuit de service (230,240) auquel est destinée la cellule et un organe combinatoire (325) pour émettre sur la ligne de données à la fois les informations de routage et lesdites cellules.

## Patentansprüche

1. Kommunikationssystem mit einem Netz (100) und einer Informations-Demultiplexer-Vorrichtung (160), die Informationszellen von einem seiner Zugriffspunkte (150 - 155) zu anderen überträgt, wobei die Informationszellen aus einem Kopfteil (HD) gebildet werden, der eine Angabe über den Bestimmungsort enthält, und aus einem Datenteil (PL), welcher aus der zu übertragenden Nutztinformation gebildet wird, und die Vorrichtung enthält:
- Mindestens einen Eingangszugriff (200) für den Erhalt der besagten Zellen,
- eine Vielzahl von Ausgangszugriffen (190_{1 - 6}) für Anwender,
- mindestens eine Netzschaltung (205), an die ein Eingangszugriff angeschlossen ist und die ein Organ zur Kopfteilanalyse (310) enthält,
- eine Vielzahl von Dienstschaltungen (230, 340), denen jeder mindestens ein Ausgangszugriff zugeteilt ist,
- eine gemeinsame Leitung (220),
**dadurch gekennzeichnet, dass** jede Netzschaltung (205) eine Leittabelle (320) enthält, um in die gemeinsame Datenleitung (220) eine Leitinformation einzugeben, die zumindest die Dienstschaltung (230, 240) definiert, und ein Kombinationsorgan (325), um über die Datenleitung (220) zugleich die Leitinformationen und die besagten Zellen zu übertragen.

2. Kommunikationssystem nach Anspruch 1, **dadurch gekennzeichnet, dass** die Dienstschaltungen (230, 240) ein Dekodierungsorgan (330) zum Dekodieren der Leitinformationen und zum Leiten der Zellen an die Dienstorgane (350 - 352) als Teil der Dienstschaltung enthalten und jeweils mit einem Zugriffsausgang (190₁₋₆) verbunden sind.

3. Kommunikationssystem nach einem der Ansprüche 1 bis 2, **dadurch gekennzeichnet, dass** die gemeinsame Leitung aus einer Litze für die Übertragung der Leitinformationen und aus einer anderen für die Übertragung der Zellen gebildet wird.

4. Kommunikationssystem nach Anspruch 1 oder 2 oder 3, **dadurch gekennzeichnet, dass** eine Vielzahl von Netzschaltungen vorgesehen sind und dadurch, dass für die Ausgabe der Netzschaltungen über die gemeinsame Datenleitung und deren Zugriff darauf Zeitintervalle vorgesehen sind.

5. Informations-Demultiplexer-Vorrichtung (160) für ein Netz (100) insbesondere der Art ATM, welches Informationszellen von einem seiner Zugriffspunkte (150 - 155) zu anderen überträgt, wobei die Informationszellen aus einem Kopfteil (HD) gebildet werden, der eine Angabe über den Bestimmungsort enthält, und aus einem Datenteil (PL), welches aus der zu übertragenden Nutztinformation gebildet wird, und die Vorrichtung enthält:
- Mindestens einen Eingangszugriff (200) für den Erhalt der besagten Zellen,
- eine Vielzahl von Ausgangszugriffen (190_{1 - 6}) für Anwender,
- mindestens eine Netzschaltung (205), an die ein Eingangszugriff angeschlossen ist und die ein Organ zur Kopfteilanalyse (310) enthält,
- eine Vielzahl von Dienstschaltungen (230, 340), denen jeder mindestens ein Ausgangszugriff zugeteilt ist,
- eine gemeinsame Leitung (220),
**dadurch gekennzeichnet, dass** jede Netzschaltung (205) eine Leittabelle (320) enthält, um in die gemeinsame Datenleitung (220) eine Leitinformation einzugeben, die zumindest die Dienstschaltung (230, 240) definiert, und ein Kombinationsorgan (325), um über die Datenleitung (220) zugleich die Leitinformationen und die besagten Zellen zu übertragen.

## Claims

1. A communication system comprising a network (100) and an information demultiplexing device (160), which device transmits from one of its access points (150-155) to another access point, information cells formed by a header portion (HD) containing an indication of the destination and by a data portion (PL) formed by transmit payload, which device comprises:
- at least an input access (200) for receiving said cells,
- a plurality of output accesses (190₁₋₆) for the users,
- at least a network circuit (205) which has an input access and comprises a header analyzing element (310),
- a plurality of service circuits (230, 240) to each of which is assigned at least an output access, and
- a common line (220),
**characterized in that** each network circuit (205) comprises a routing Table (320) for producing on the common data line (220) routing information which defines at least the service circuit (230, 240) that forms the destination of the cell, and a combining element (325) for transmitting over the data line (220) both the routing information and said cells.

2. A communication system as claimed in claim 1, **characterized in that** the service circuits (230, 240) comprise a decoding element (330) for decoding the routing information and for switching the cells to service elements (350-352) which form part of the service circuit and which service elements are connected each to an output access (190₁₋₆).

3. A communication system as claimed in one of the claims 1 and 2, **characterized in that** the common line is formed by a flat cable for the transmission of routing information and another flat cable for the transmission of cells.

4. A communication system as claimed in Claim 1, 2 or 3, **characterized in that** a plurality of network circuits are provided and **in that** access time intervals for the common data line are provided for the output of each of the network circuits.

5. A demultiplexing device (160), more specifically, for an ATM network (100), which device transmits from one of its access points (150-155) to another access point, information cells formed by a header portion (HD) containing an indication of the destination and by a data portion (PL) formed by transmit payload, which device comprises:
- at least an input access (200) for receiving said cells,
- a plurality of output accesses (190₁₋₆) for the users,
- at least a network circuit (205) which has an input access and comprises a header analyzing element (310),
- a plurality of service circuits (230, 240) to each of which is assigned at least an output access, and
- a common line (220),
**characterized in that** each network circuit (205) comprises a routing Table (320) for producing on the common data line (220) routing information which defines at least the service circuit (230, 240) that forms the destination of the cell, and a combining element (325) for transmitting over the data line both the routing information and said cells.
